# EUROPÄISCHE PATENTANMELDUNG

(11) **EP 0 769 442 A2**
(43) Veröffentlichungstag der Anmeldung: **23.04.1997**
(21) Anmeldenummer: 96115939.9
(22) Anmeldetag: 04.10.1996
(51) Int. Cl.: B62D 1/10

(54) **Befestigung eines Fahrzeuglenkrades an einer Lenkwelle**

(30) Priorität: 20.10.1995 DE 29516623 U
(71) Anmelder: TRW Occupant Restraint Systems GmbH, 73551 Alfdorf (DE)
(72) Erfinder: Heilig, Alexander, 73550 Wissgoldingen (DE)
(74) Vertreter: Degwert, Hartmut, Dipl.-Phys.

(57) **Zusammenfassung**

Die Erfindung betrifft eine Befestigung eines Fahrzeuglenkrades an einer Lenkwelle, mit einer drehfesten Welle/Nabe-Verbindung zwischen einer Nabe (10) des Lenkrades und einem dem Lenkrad zugeordneten Ende der Lenkwelle (30) und mit einem Spannelement (12), welches eine in der Richtung der Längsachse der Lenkwelle (30) wirksame Formschlußverbindung zwischen der Nabe (10) und der Lenkwelle (30) bildet. Gemäß der Erfindung ist vorgesehen, daß das Spannelement ein Schraubbolzen (12) bzw. eine Schraubmutter (13) ist, der bzw. die mit der Lenkwelle (30) zusammenwirkt, und daß in der Nabe (10) ein drehbares Angriffselement (24; 50) gelagert ist, das in den Schraubbolzen (12) bzw. die Schraubmutter (13) eingreift und das mit einer von der Außenseite der Nabe (10) aus zugänglichen Formschlußgestaltung (28) für ein Spannwerkzeug versehen ist.

## Beschreibung

Die Erfindung betrifft eine Befestigung eines Fahrzeuglenkrades an einer Lenkwelle, mit einer drehfesten Welle/Nabe-Verbindung zwischen einer Nabe des Lenkrades und einem dem Lenkrad zugeordneten Ende der Lenkwelle und mit einem Spannelement, welches eine in der Richtung der Längsachse der Lenkwelle wirksame Formschlußverbindung zwischen der Nabe und der Lenkwelle bildet.

An eine solche Befestigung werden üblicherweise die folgenden Anforderungen gestellt: Die Befestigung muß das Lenkrad fest und sicher mit der Lenkwelle verbinden, da ein unbeabsichtigtes Lösen dieser Verbindung schwerwiegende Folgen haben könnte. Weiterhin muß die Verbindung lösbar sein, so daß ein Austausch beispielsweise des Lenkrades möglich ist. Schließlich muß eine Justierung der Winkelausrichtung des Lenkrades relativ zur Lenkwelle möglich sein.

Bei der üblichen Befestigung des Lenkrades an der Lenkwelle wird für die drehfeste Welle/Nabe-Verbindung eine Keilwellenverbindung verwendet. Durch Aufstecken der mit einem Keilnabenprofil versehenen Nabe auf das als Keilwellenprofil ausgebildete Ende der Lenkwelle wird eine drehfeste Verbindung zwischen Lenkrad und Lenkwelle erzielt, deren Winkelausrichtung einstellbar ist. Für die Festlegung der Nabe an der Lenkwelle in deren axialer Richtung wird auf einen am genannten Ende der Lenkwelle ausgebildeten Gewindefortsatz von der Innenseite der Nabe aus eine Mutter aufgeschraubt, welche die Nabe mit der Lenkwelle verspannt. Somit ist das Lenkrad fest und sicher an der Lenkwelle befestigt.

Als Folge des in letzter Zeit gestiegenen Sicherheitsbewußtseins kommen vermehrt Gassack-Rückhaltesysteme zum Einsatz, die fahrerseitig im Innenraum der Nabe des Lenkrades angeordnet sind. Im Interesse einer rationellen Montage sollte ein solches Gassack-Rückhaltesystem dem Fahrzeughersteller bereits fertig im Lenkrad montiert geliefert werden. Dies hat aber zur Folge, daß durch die in die Nabe des Lenkrades eingebauten Komponenten des Gassack-Rückhaltesystems ein Zugang zu einem im Innenraum der Nabe angeordneten Spannelement schwierig oder gar unmöglich ist.

Daher ist es Aufgabe der Erfindung, eine Befestigung der eingangs genannten Art zu schaffen, bei der das Verbinden des Lenkrades mit der Lenkwelle vom Außenraum der Nabe aus erfolgen kann.

Zu diesem Zweck ist bei einer Befestigung der eingangs genannten Art gemäß einer ersten Ausführungsform der Erfindung vorgesehen, daß das Spannelement ein Schraubbolzen ist, dessen Gewindeschaft in eine Gewindebohrung in der Lenkwelle eingeschraubt ist und dessen Kopf in der Nabe drehbar, aber axial fest aufgenommen und am Außenumfang mit einer Verzahnung versehen ist, und daß in der Nabe ein Ritzel gelagert ist, dessen Verzahnung in der Verzahnung des Schraubbolzens kämmt und das mit einer von der Außenseite der Nabe aus zugänglichen Formschlußausnehmung für ein Spannwerkzeug versehen ist. Gemäß einer zweiten Ausführungsform der Erfindung ist vorgesehen, daß das Spannelement eine in der Nabe drehbar, aber axial fest aufgenommene Schraubmutter ist, deren Innengewinde mit dem Ende der Lenkwelle verschraubt ist und deren Außenumfang mit einer Verzahnung versehen ist, und daß in der Nabe ein Ritzel gelagert ist, dessen Verzahnung in der Verzahnung der Schraubmutter kämmt und das mit einer von der Außenseite der Nabe aus zugänglichen Formschlußausnehmung für ein Spannwerkzeug versehen ist. Auf diese Weise kann durch Einsetzen eines geeigneten Werkzeuges in die Spannausnehmung das Spannelement leicht von der Rückseite des Lenkrades aus angezogen werden, ohne daß dafür der Innenraum der Nabe zugänglich sein muß.

Die Erfindung wird nachfolgend unter Bezugnahme auf die beigefügte Zeichnung erläutert. In dieser zeigen:
- Fig. 1 schematisch eine erste Ausführungsform einer erfindungsgemäßen Befestigung eines Lenkrades an einer Lenkwelle;
- Fig. 2 schematisch eine zweite Ausführungsform einer erfindungsgemäßen Befestigung eines Lenkrades an einer Lenkwelle;
- Fig. 3 eine Ausführungsvariante; und
- die Figuren 4 und 5 eine weitere Ausführungsvariante.

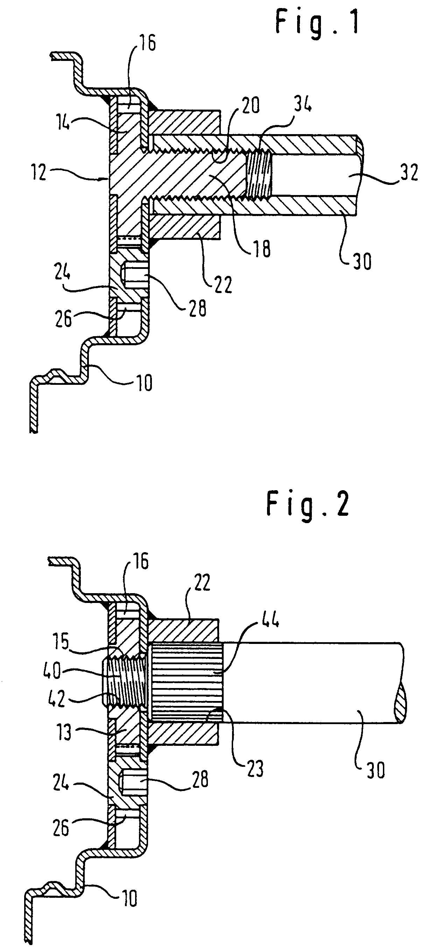

In Fig. 1 ist schematisch eine erste Ausführungsform der Erfindung dargestellt. Das (nicht dargestellte) Fahrzeuglenkrad enthält eine ausschnittsweise gezeigte Nabe 10, wobei der Innenraum der Nabe bezüglich der Figur links des dargestellten Abschnittes der Nabe 10 liegt. Im doppelwandigen Boden der Nabe 10 ist ein Schraubbolzen 12 drehbar, aber axial fest aufgenommen, dessen Kopf 14 am Außenumfang mit einer Verzahnung 16 versehen ist. Der Schaft 18 des Schraubbolzens 12 erstreckt sich durch eine Öffnung im Boden der Nabe 10 nach außen und ist mit einem Außengewinde 20 versehen. Die Nabe 10 ist an der Außenseite mit einem Ansatz in Form einer Hülse 22 versehen, welche konzentrisch mit der Öffnung im Boden der Nabe 10 angeordnet ist und den Schaft 18 mit allseitigem Spiel umgibt.

Im Boden der Nabe 10 ist weiterhin ein Ritzel 24 drehbar aufgenommen, dessen Verzahnung 26 in der Verzahnung 16 kämmt. Die beiden Verzahnungen sind Stirnradverzahnungen. Das Ritzel 24 ist mit einer vom Außenraum der Nabe 10 aus zugänglichen Formschlußausnehmung 28 für den Eingriff eines Spannwerkzeugs versehen, welches beispielsweise die Form eines Innensechskants haben kann.

Das dem Lenkrad zugeordnete Ende einer Lenkwelle 30 ist mit einer Bohrung 32 versehen, in der ein Innengewinde 34 gebildet ist, welches zum Außengewinde 20 des Schraubbolzens 12 komplementär ist. Ferner ist der Außendurchmesser dieses Endes der Lenkwelle 30 an den Innendurchmesser der Hülse 22 angepaßt.

Das Lenkrad wird in der folgenden Weise mit der Lenkwelle verbunden: Das Lenkrad wird auf die Lenkwelle aufgesetzt, bis der Schaft 18 des Schraubbolzens 12 am Ende der Lenkwelle 30 anliegt. Dann wird ein Spannwerkzeug in die Formschlußausnehmung 28 eingesetzt, und mittels diesem Spannwerkzeug wird über das Ritzel der Schraubbolzen in der geeigneten Richtung gedreht, so daß sich das Außengewinde 20 des Schraubbolzens 12 in das Innengewinde 34 der Lenkwelle 30 einschraubt. Dabei wird das dem Lenkrad zugeordnete Ende der Lenkwelle in die Hülse 22 hineingezogen, bis es am Boden der Nabe 10 anliegt. Wenn der Schraubbolzen 12 mit einem geeigneten Anzugsdrehmoment angezogen ist, ist die Befestigung des Lenkrades an der Lenkwelle beendet.

In Fig. 2 ist schematisch eine zweite Ausführungsform der Erfindung dargestellt. Soweit diese Ausführungsform mit der ersten Ausführungsform übereinstimmt, werden die gleichen Bezugszeichen verwendet.

Das (nicht dargestellte) Fahrzeuglenkrad enthält eine ausschnittsweise gezeigte Nabe 10, wobei der Innenraum der Nabe bezüglich der Figur links des dargestellten Abschnittes der Nabe 10 liegt. Im doppelwandigen Boden der Nabe 10 ist eine Schraubmutter 13 drehbar, aber axial fest aufgenommen, die ein Innengewinde 15 enthält und deren Außenumfang mit einer Verzahnung 16 versehen ist. Der Boden der Nabe 10 ist weiterhin mit einer Öffnung im Boden und mit einem Ansatz in Form einer Hülse 22 versehen, wobei sowohl die Öffnung als auch die Hülse 22 auf die Drehachse der Schraubmutter 13 zentriert sind. Die Innenseite der Hülse ist mit einem Keilnabenprofil 23 versehen.

Im Boden der Nabe 10 ist weiterhin ein Ritzel 24 drehbar aufgenommen, welches dem Ritzel aus der ersten Ausführungsform entspricht.

Das dem Lenkrad zugeordnete Ende einer Lenkwelle 30 ist mit einem Fortsatz 40 versehen, der ein Außengewinde 42 aufweist, welches zum Innengewinde 15 der Schraubmutter komplementär ist. An den Fortsatz 40 schließt sich ein Abschnitt an, der mit einem Keilwellenprofil 44 versehen ist, welches zum Keilnabenprofil 23 komplementär ist.

Das Lenkrad wird in der folgenden Weise mit der Lenkwelle verbunden: Das Lenkrad wird auf die Lenkwelle aufgesetzt, wobei das Keilwellenprofil 44 der Lenkwelle 30 in das Keilnabenprofil 23 der Hülse 22 eingreift. Dann wird ein Spannwerkzeug in die Formschlußausnehmung 28 eingesetzt, und mittels dieses Spannwerkzeugs wird über das Ritzel der Schraubbolzen in der geeigneten Richtung gedreht, so daß sich das Innengewinde 15 auf das Außengewinde 42 schraubt. Dabei wird das dem Lenkrad zugeordnete Ende der Lenkwelle weiter in die Hülse 22 hineingezogen, bis es am Boden der Nabe 10 anliegt. Wenn die Mutter 13 mit einem geeigneten Anzugsdrehmoment angezogen ist, ist die Befestigung des Lenkrades an der Lenkwelle beendet.

Durch das mit dem Spannelement in Verbindung stehende Ritzel und die in diesem gebildete Formschlußausnehmung ist es für das Befestigen des Fahrzeuglenkrades an der Lenkwelle nicht erforderlich, daß der Innenraum der Nabe zugänglich ist. Somit ergibt sich die Möglichkeit, in den Innenraum der Nabe des Lenkrades die entsprechenden Komponenten eines Gassack-Rückhaltesystems einzubauen, bevor das Lenkrad mit der Lenksäule verbunden wird. Gemäß einer (nicht dargestellten) Weiterbildung der ersten bzw. der zweiten Ausführungsform können der Schraubbolzen bzw. die Lenkwelle hohl sein, so daß ein Gasgenerator in der Lenkwelle angeordnet werden kann, der dann über deren Innenraum mit dem Innenraum der Nabe in Verbindung steht, in der die entsprechenden Komponenten eines Gassack-Rückhaltesystems angeordnet sind. Gemäß einer (nicht dargestellten) weiteren Weiterbildung kann das Ritzel auch mit einer Drehachse angeordnet werden, welche die Drehachse des Spannelementes in einem Winkel von 90° schneidet. In diesem Fall wären die beiden Verzahnungen Kegelradverzahnungen, und die Spannausnehmung wäre von der Seite aus zugänglich.

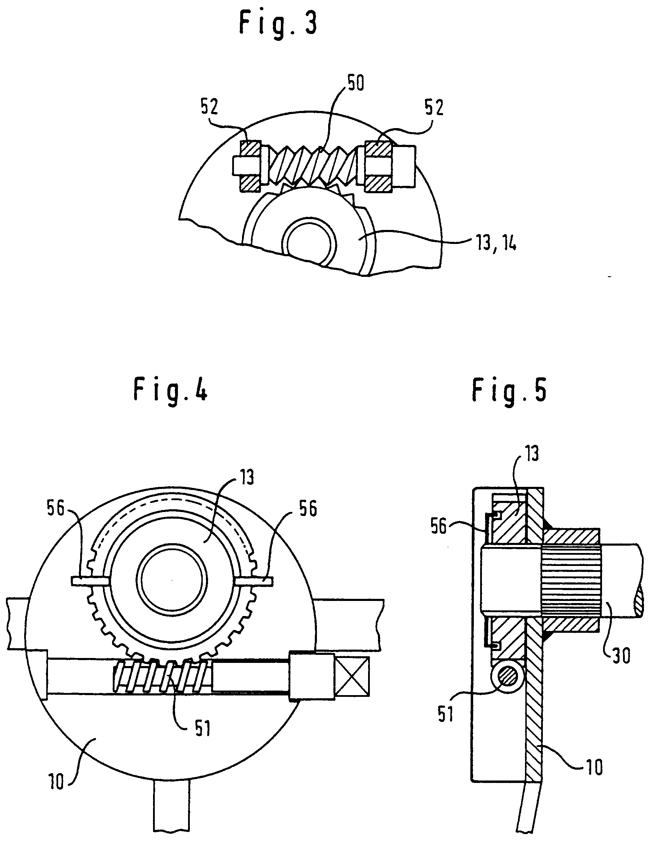

Bei der in Fig. 3 gezeigten Ausführungsvariante wird die Schraubmutter 13, oder analog der Kopf 14 des Schraubbolzens 12, mittels einer Ritzelschraube 50 angetrieben, die von der Seite der Lenkwelle her zugänglich ist. Diese Ritzelschraube 50 ist in Lagerelementen 52 an der Lenkradnabe drehbar gelagert und axial gesichert. Wie bei den zuvor beschriebenen Ausführungsformen bildet die Ritzelschraube 50 mit der Schraubmutter 13 bzw. mit dem Kopf 14 des Schraubbolzens 12 ein Getriebe, das durch Reibung der beteiligten Elemente selbsthemmend ist.

Bei der in den Fig. 4 und 5 gezeigten Ausführungsform wird eine Schraube 51 mit Schneckengewinde verwendet, um die Schraubmutter 13 auf dem Gewinde am Ende der Lenkwelle 30 zu verdrehen. Die Schraubmutter 13 wird durch eine Halterung 56 in der vorgesehenen Stellung gehalten. Die Schraube 51 kann von beiden Seiten in die Nabe des Lenkrades eingeführt werden, so daß sie sowohl beim Festschrauben der Schraubmutter 13 als auch beim Lösen in die Nabe hinein- und gegen einen geeigneten Anschlag gezogen wird. Alternativ kann vorgesehen sein, die Schraubmutter 13 nur von einer Seite der Nabe aus zu betätigen. In diesem Fall wird vorzugsweise zum Lösen eine Schraube 51 mit einer Gewindesteigung verwendet, die entgegengesetzt zur Gewindesteigung der Schraube ist, die zum Festschrauben der Schraubmutter 13 verwendet wird. Auf diese Weise wird verhindert, daß die Schraube 51 beim Festschrauben oder beim Lösen der Schraubmutter 13 aus der Nabe herausgedrückt wird. Nach dem Festschrauben bzw. Lösen der Schraubmutter 13 kann die Schraube aus der Nabe entfernt werden.

## Patentansprüche

1. Befestigung eines Fahrzeuglenkrades an einer Lenkwelle,
mit einer drehfesten Welle/Nabe-Verbindung zwischen einer Nabe (10) des Lenkrades und einem dem Lenkrad zugeordneten Ende der Lenkwelle (30) und
mit einem Spannelement (12), welches eine in der Richtung der Längsachse der Lenkwelle (30) wirksame Formschlußverbindung zwischen der Nabe (10) und der Lenkwelle (30) bildet,
dadurch gekennzeichnet, daß das Spannelement ein Schraubbolzen (12) ist, dessen Gewindeschaft (18) in eine Gewindebohrung (32) in der Lenkwelle (30) eingeschraubt ist und dessen Kopf (14) in der Nabe (10) drehbar, aber axial fest aufgenommen und am Außenumfang mit einer Verzahnung (16) versehen ist, und daß in der Nabe (10) ein drehbares Angriffselement (24; 50) gelagert ist, das mit der Verzahnung (16) des Schraubbolzens (12) kämmt und das mit einer von der Außenseite der Nabe (10) aus zugänglichen Formschlußgestaltung (28) für ein Spannwerkzeug versehen ist.

2. Befestigung eines Fahrzeuglenkrades an einer Lenkwelle,
mit einer drehfesten Welle/Nabe-Verbindung zwischen einer Nabe (10) des Lenkrades und einem dem Lenkrad zugeordneten Ende der Lenkwelle (30) und
mit einem Spannelement (12), welches eine in der Richtung der Längsachse der Lenkwelle (30) wirksame Formschlußverbindung zwischen der Nabe (10) und der Lenkwelle (30) bildet,
dadurch gekennzeichnet, daß das Spannelement eine in der Nabe (10) drehbar, aber axial fest aufgenommene Schraubmutter (13) ist, deren Innengewinde (15) mit dem Ende der Lenkwelle (30) verschraubt ist und deren Außenumfang mit einer Verzahnung (16) versehen ist, und daß in der Nabe (10) ein drehbares Formschlußelement (24; 50) gelagert ist, das mit der Verzahnung (16) der Schraubmutter (13) kämmt und das mit einer von der Außenseite der Nabe (10) aus zugänglichen Formschlußgestaltung (28) für ein Spannwerkzeug versehen ist.

3. Befestigung nach einem der Ansprüche 1 und 2, dadurch gekennzeichnet, daß die Verzahnungen (16, 26) des Spannelementes (12; 13) und des als Ritzel (24) ausgebildeten Angriffselements Stirnradverzahnungen sind.

4. Befestigung nach einem der Ansprüche 1 und 2, dadurch gekennzeichnet, daß die Verzahnungen (16, 26) des Spannelementes (12; 13) und des als Ritzel (24) ausgebildeten Angriffselements Kegelradverzahnungen sind.

5. Befestigung nach Anspruch 1 oder 2, dadurch gekennzeichnet, daß das Angriffselement mit der Verzahnung (16) des Spannelementes (12; 13) nach Art eines Schneckengetriebes zusammenwirkt.

6. Befestigung nach einem der vorhergehenden Ansprüche, dadurch gekennzeichnet, daß die drehfeste Welle/Nabe-Verbindung durch ein Keilwellenprofil (44) auf der Lenkwelle und durch ein Keilnabenprofil (23) in einem Ansatz der Nabe (10) gebildet ist.
